# EUROPÄISCHE PATENTSCHRIFT

(11) **EP 1 399 376 B1**
(45) Veröffentlichungstag und Bekanntmachung des Hinweises auf die Patenterteilung: **16.07.2008**
(21) Anmeldenummer: 02745315.8
(22) Anmeldetag: 24.05.2002
(51) Int. Cl.: B65G 53/52, B65G 53/28

(54) **VERFAHREN UND VORRICHTUNG ZUR PNEUMATISCHEN FÖRDERUNG VON GESCHNITTENEN GLASFASERN**
METHOD AND DEVICE FOR PNEUMATIC CONVEYANCE OF CUT GLASS FIBERS
PROCEDE ET DISPOSITIF DE TRANSPORT PNEUMATIQUE DE FIBRES DE VERRE COUPEES

(30) Priorität: 06.06.2001 DE 10127427
(43) Veröffentlichungstag der Anmeldung: 24.03.2004
(73) Patentinhaber: LANXESS Deutschland GmbH, 51369 Leverkusen (DE)
(72) Erfinder: GRASSHOFF, Herbert, 47443 Moers (DE)
(86) Internationale Anmeldenummer: PCT/EP2002/005706
(87) Internationale Veröffentlichungsnummer: WO 2002/098772

(56) Entgegenhaltungen:
- EP-A- 0 692 441
- US-A- 3 304 127
- US-A- 5 240 355
- US-A- 6 106 202

## Beschreibung

Die Erfindung betrifft ein Verfahren und eine Vorrichtung zur pneumatischen Förderung von feinteiligen Schüttgütern, insbesondere Glasfasern.

Stand der Technik: Glasfasern werden in großen Mengen in der Kunststoffherstellung - insbesondere für die Herstellung glasfaserverstärkter Kunststoffe - eingesetzt. Dabei ist für die Handhabung der Glasfasern, insbesondere den Transport und die Beschickung der Produktionsanlagen ein erheblicher Aufwand erforderlich. Der Platzbedarf für die Bevorratung der Glasfasergebinde ist erheblich.

Glasfasern werden üblicherweise in Form von Faserbündeln verarbeitet. Die Faserbündel bestehen dabei beispielsweise aus 2000 parallelen Einzelfasern mit einer typischen Länge von etwa 4,5 mm.

Zur Zeit gebräuchliche Fördertechniken zur absatzweisen Beschickung/Befüllung der Produktionsanlagen mit geschnitten Glasfasern sind Aufzuganlagen, Flurförderfahrzeuge wie Gabelstapler oder Krananlagen.

Kontinuierliche Förderung kann z. B. über Becherwerke, Stetigförderer, Rüttel- bzw. Vibrationsrinnen oder Transportbänder erfolgen.

Nachteilig ist, dass diese Fördertechniken zum Teil sehr aufwendig sind und aufgrund ihrer Form und ihres Platzbedarfs nur schwer in bereits vorhandene Produktionsanlagen und deren Gebäudelogistik zu integrieren sind.

Ein Ausweg bietet der Einsatz von Anlagen zur pneumatischen Förderung. Allerdings treten beim Betrieb pneumatischer Förderanlagen für die Förderung geschnittener Glasfasern diverse Probleme hinsichtlich der Qualitätssicherung und der Betriebssicherheit auf.

Bei der pneumatischen Flugförderung bewegen sich alle Schüttgut-Partikeln bzw. Glasfasern in Form von Faserbündeln in etwa gleichmäßig über den Rohrquerschnitt verteilt. Partikeln mit Partikelgrößen oberhalb ca. 1mm prallen dabei gegeneinander und die Rohrwände, was zu Querbewegungen und Rotationen der Partikeln führt. Bei kleineren Partikeln werden die Querbewegungen durch die Turbulenzen der Luftströmung hervorgerufen. Aufgrund der hohen Fördergeschwindigkeit - die Strömung ist im Allgemeinen turbulent - kommt es zu einem starken Abrieb der Glasfaserbündel. Die Faserbündel werden teilweise aufgelöst und zu Glaswatte zerrieben und können daher dann nicht mehr weiterverarbeitet werden. Darüber hinaus kann es zur Verstopfung der Förderrohre mit Glasfasern kommen.

Bei der pneumatischen Langsamförderung, bei der die Glasfasern typischerweise mit Geschwindigkeiten von ≤ 5 m/s gefördert werden, kommt es aufgrund der vergleichsweise niedrigeren Geschwindigkeit zu einer teilweisen Ablagerung der Glasfasern im horizontalen Rohr. Die resultierende Strömungsform ist eine Strähnenförderung. Der auf dem Rohrboden sedimentierte Faseranteil wird in Form von Strähnen mehr oder weniger schnell weitertransportiert. Bei weiterer Erniedrigung der Fördergeschwindigkeit kommt es zu einer Dünen-artigen Förderung der sedimentierten Fasern bzw. zu einer Förderung in Pfropfen, die den gesamten Rohrquerschnitt ausfüllen können.

Bei dem Einsatz von Drucksendern (d.h. eine Druckvorlage zur Aufgabe von Glasfaserportionen) für die Langsamförderung im Rohrleitungssystem wird der Drucksender in seinem Auslassbereich von den geschnitten Glasfasern verstopft.

Bei der Förderung der Glasfasern mit Zellenradschleusen als Zuteiler in das Rohrleitungssystem, in dem die pneumatische Förderung betrieben wird, kann die Zerstörung der geschnitten Glasfasern durch die Zellenradschleuse als Dosierorgan selbst bewirkt werden. Daraus resultiert ein Blockieren der Zellenradschleuse durch die Glasfasern, die sich zwischen Rotor und Stator des Zellenrades festsetzen.

Verfahren zur Langsamförderung von schwierig oder materialschonend zu behandelnden Schüttgütern wie die Saugförderung unter Einsatz von Nebenluftventilen oder die Druckförderung mit Reingas führenden Nebenleitungen mit elastischem Innenrohr verändern die geschnitten Glasfasern zu hoher Fördergeschwindigkeit aufgrund von Stößen und Reibung zwischen den Glasfasern untereinander sowie zwischen Glasfasern und Förderanlage - z. B. - Rohr zu stark. Dadurch kommt es zur Auflösung der Faserbündel.

Aufgrund von Abrasion des Fördergutes wird das pneumatische Fördersystem durchschliffen. Bekannte Anlagen, wie z.B. die Anlage von Hepp, Winkhardt und Weingarten, erschienen in "Schüttgut" (vol. 2, 1996, Nr. 1, Seiten 53-59), oder Materialien für Fördersysteme sind daher nicht betriebssicher und zu wartungsintensiv. Hinzu kommt die mögliche Schädigung der Glasfasern bei Transport.

Somit ist mit den beschriebenen Fördersystemen nach dem Stand der Technik keine befriedigende Beschickung der Produktionsanlagen mit geschnittenen Glasfasern möglich, die sich durch hohe Betriebssicherheit, niedrigen Betriebsaufwand (Verschleiß, Handhabung) und Materialschonung (Qualitätssicherung) auszeichnet.

Die Aufgabe der vorliegenden Erfindung besteht darin, eine Vorrichtung und ein Verfahren zur pneumatischen Förderung von geschnittenen Glasfasern zur Verfügung zu stellen, das in starkem Maße betriebssicher ist, wartungsarm und leicht zu bedienen ist sowie materialschonend arbeitet.

Die Aufgabe wird erfindungsgemäß gelöst durch eine Vorrichtung zur pneumatischen Förderung von feinteiligen Schüttgütern, insbesondere Glasfasern, die wenigstens aufweist einen Aufgabebehälter, ein pneumatisches Förderrohr mit einem ersten Abschnitt und einen zweiten Abschnitt, eine Saugfördereinrichtung für das Fördergas, die mit dem Ende des ersten Abschnitts des Förderrohrs verbunden ist, eine Druckfördereinrichtung für das Fördergas, eine Fördergas-Nebenleitung, mehrere Absperrarmaturen zwischen pneumatischem Förderrohr und Fördergas-Nebenleitung und eine Abgabestelle, wobei das Förderrohr in den zur Verstopfung neigenden Stellen eine erhöhte Anzahl an Absperrarmaturen aufweist, die das Auftreten von Verstopfungen verhindern, dadurch gekennzeichnet dass das Förderrohr an der Innenwand eine Härte von 50 bis 90 HRC aufweist.

Als Aufgabebehälter sind Container, BIG-BAGs (Gewebecontainer), Silos, Bunker, Lagerräume, Kessel, Auflieger für Lastkraftwagen oder sonstige Behälter geeignet.

Bei dem pneumatischen Förderrohr handelt es sich vorzugsweise um ein Rohr mit Nennweiten von 100 bis 200 mm und einer Länge von 10 bis 200 m und mehr, das vorzugsweise aus durchgehärtetem Stahl ausgeführt ist. Besonders bevorzugt weist das Förderrohr an der Innenwand eine Härte von 60 bis 65 HRC auf. Vorzugsweise ist das Förderrohr aus verschiedenen Segmenten zusammengesetzt, die beispielsweise über Flanschverbindungen verbunden sind. Zur schonenden Förderung der Fasern ist insbesondere auf eine vor- und rücksprungfreie Verlegung des Förderrohrs zu achten.

Als Saugfördereinrichtung sind beliebige Maschinen zur Erzeugung von Unterdruck für Gase geeignet. Vorzugsweise wird ein Gebläse oder ein Ventilator eingesetzt.

Sowohl der erste als auch der zweite Abschnitt des pneumatischen Förderrohrs sowie die Fördergas-Nebenleitung sind bevorzugt über eine Rohrleitung mit einem Anschluss für Fördergas verbunden, das mit dem gewünschten Vordruck zur Verfügung steht. Als Druckfördereinrichtung sind beliebige Maschinen zur Erzeugung von Überdruck für Gase geeignet. Vorzugsweise wird ein Gebläse, ein Ventilator, ein Verdichter oder ein Kompressor eingesetzt.

Als Fördergas-Nebenleitung ist grundsätzlich jede einfache Rohrleitung geeignet, die ebenfalls vorzugsweise aus verschiedenen Segmenten zusammengesetzt sein kann, die beispielsweise über Flanschverbindungen verbunden sind. Die Nebenleitung ist endständig verschlossen oder schließbar, damit sich darin Druck aufbauen kann.

Das Förderrohr und die Fördergas-Nebenleitung sind beispielsweise über kurze Rohrstücke miteinander verbunden. Die Rohrstücke tragen die Absperrarmaturen.

Die Abgabestelle kann beispielsweise nur zu Lager- oder Dosierzwecken dienen oder bereits der Apparat zur Weiterverarbeitung des feinteiligen Schüttguts selbst sein. Es kann z.B. die Vorlage für einen Extruder sein. Grundsätzlich sind als Abgabestelle alle Behälter wie Container, BIG-BAGs (Gewebecontainer), Silos, Bunker, Lagerräume, Kessel, Auflieger für Lastkraftwagen, Reaktions- oder Weiterverarbeitungs-Kessel, Extruder oder sonstige Behälter und Apparate geeignet.

In einer bevorzugten Ausführungsform der Vorrichtung sind die Absperrarmaturen zweistufig ausgebildet, wobei die erste Stufe, die an das Förderrohr angeschlossen ist, rückschlagsichernd gegenüber erhöhtem Druck im Förderrohr ausgebildet ist.

In einer bevorzugten Ausführungsform der Vorrichtung sind Absperrarmaturen zweistufig ausgebildet, wobei die zweite Stufe, die an die Fördergas-Nebenleitung angeschlossen ist, als Einlassventil mit Druckvoreinstellung für das Fördergas aus der Fördergas-Nebenleitung ausgebildet ist.

In einer bevorzugten Ausführungsform der Vorrichtung sind das Förderrohr mit der Fördergas-Nebenleitung über eine Vielzahl von Absperrarmaturen in Abständen von 200 mm bis 2000 mm verbunden.

In einer bevorzugten Ausführungsform der Vorrichtung ist die Druckfördereinrichtung absperrbar mit der Fördergas-Nebenleitung verbunden.

In einer bevorzugten Ausführungsfonn der Vorrichtung ist die Druckfördereinrichtung absperrbar mit dem Anfang des zweiten Abschnitts des Förderrohrs verbunden.

In einer bevorzugten Ausführungsform der Vorrichtung ist zwischen dem ersten Abschnitt des Förderrohrs und dem zweiten Abschnitt des Förderrohrs eine Absperrarmatur, insbesondere ein Quetschventil, angeordnet.

In einer bevorzugten Ausführungsform der Vorrichtung ist zwischen dem Aufgabebehälter und dem ersten Abschnitt des Förderrohrs eine Absperrarmatur, insbesondere ein Quetschventil angeordnet.

Sowohl die Abgabestelle, die Aufgabestelle als auch die Saug- und Druckfördereinrichtung können unabhängig voneinander zur Vermeidung von Kontamination der Umgebung (mit Glasfaserstaub) mit einer Filtration versehen werden. Hierzu werden z.B. selbstabreinigende Filtereinrichtungen verwendet.

Die Aufgabe wird erfindungsgemäß weiterhin gelöst durch ein Verfahren zur pneumatischen Förderung von feinteiligen Schüttgütern unter Verwendung einer Vorrichtung, die wenigstens aufweist einen Aufgabebehälter, ein pneumatisches Förderrohr mit einem ersten Abschnitt und einen zweiten Abschnitt, eine Saugfördereinrichtung für das Fördergas, eine Druckfördereinrichtung für das Fördergas, eine Fördergas-Nebenleitung, mehrere Absperrarmaturen zwischen dem pneumatischen Förderrohr und der Fördergas-Nebenleitung und eine Abgabestelle, wobei
a) man in einem ersten Schritt den ersten Abschnitt des Förderrohrs mit einer Aufgabeportion des Förderguts und Fördergas aus einem Aufgabebehälter mittels Saugförderung füllt,
b) man in einem zweiten Schritt das Fördergut aus dem ersten Abschnitt des Förderrohrs mittels Druckförderung in den zweiten Abschnitt des Förderrohrs überführt und
c) man in einem dritten Schritt die in den zweiten Abschnitt des Förderrohrs geförderte Aufgabeportion des Förderguts mittels Druckförderung zur Abgabestelle fördert,
wobei die Fördergas-Nebenleitung endständig verschlossen oder verschließbar ist und die Druckförderung im zweiten Abschnitt des Förderrohrs mit einer konstanten Fördergasmenge für Förderrohr und Fördergas-Nebenleitung betrieben wird, dadurch gekennzeichnet, dass das Förderrohr an der Innenwand eine Härte von 50 bis 90 HRC aufweist.

Dadurch, dass die Fördergasmenge konstant gehalten wird, wird gewährleistet, dass Verschleiß hervorrufende Fördergeschwindigkeiten vermieden werden. Leerrohrgeschwindigkeiten von 2 m/s bis 8 m/s bevorzugt 4 bis 5 m/s haben sich als besonders geeignet für die Förderung von geschnittenen Glasfasern herausgestellt.

Vorzugsweise wird das Verfahren so durchgeführt, dass der erste Schritt, d. h. die Befüllung des ersten Abschnitts des pneumatischen Förderrohrs ausgeführt wird, wenn der zweite Schritt, d. h. die Druckförderung des Förderguts aus dem ersten Abschnitt in den zweiten Abschnitt des Förderrohrs abgeschlossen ist. Folglich können der erste Schritt eines Förderzykluses und der dritte Schritt des vorhergehenden Förderzykluses, d. h. die Druckförderung des Förderguts im zweiten Abschnitt des Förderguts zur Abgabestelle, zeitgleich ausgeführt werden. Unter einem Förderzyklus wird dabei die Abfolge der drei oben genannten Schritte verstanden.

Bevorzugt ist eine Variante des Verfahrens, bei dem man in den zur Verstopfung neigenden Stellen des Förderrohrs mittels einer erhöhten Anzahl an Absperrarmaturen das Auftreten von Verstopfungen verhindert, indem die an diesen Stellen installierten Absperrarmaturen bei auftretendem Druckverlust öffnen und in den Bereich der einsetzenden Verstopfung Fördergas einleiten.

Im Falle einer einsetzenden Verstopfung steigt der Druck in der Förderleitung vor der einsetzenden Verstopfung. Folglich steigt der Druck in der Bypass-Leitung ebenfalls so lange, bis die Absperrarmaturen hinter der einsetzenden oder bereits eingetretenen Verstopfung öffnen und das eintretende Fördergas die Förderung des Gutes hinter der einsetzenden oder bereits eingetretenen Verstopfung aufrechterhält. Gleichzeitig wird durch das eintretende Fördergas die Verstopfung aufgelöst und behoben.

Bevorzugt ist eine Variante des Verfahrens, bei dem man Absperrarmaturen verwendet, die zweistufig ausgebildet sind, wobei die erste Stufe, die an das Förderrohr angeschlossen ist, rückschlagsichernd ist und schließt, wenn der Druck in dem pneumatischen Förderrohr gleich groß oder größer als der Druck in der Fördergas-Nebenleitung ist.

Ebenfalls bevorzugt ist eine Variante des Verfahrens, bei dem man Absperrarmaturen verwendet, die zweistufig ausgebildet sind, wobei die zweite Stufe, die an die Fördergas-Nebenleitung angeschlossen ist, als Einlassventil mit Druckvoreinstellung für das Fördergas aus der Fördergas-Nebenleitung ausgebildet ist, wobei ein Druck voreingestellt wird, der größer ist als der Druck an der Anschlussstelle im Förderrohr bei verstopfungsfreiem Betrieb des Förderrohrs.

Vorzugsweise ist der voreingestellte Druck um 5-70% größer als der Druck an der entsprechenden Stelle im Förderrohr bei verstopfungsfreiem Betrieb des Förderrohrs, besonders bevorzugt um 20-50%.

Ebenfalls bevorzugt ist eine Variante des Verfahrens, bei dem der Druck in der zweiten Stufe der Absperrarmaturen in Förderrichtung gesehen von Armatur zu Armatur ansteigend voreingestellt wird.

Bevorzugt ist eine Variante des Verfahrens, bei dem man ein Förderrohr verwendet, das mit der Fördergas-Nebenleitung über eine Vielzahl von Absperrarmaturen in Abständen von 200 mm bis 2000 mm verbunden ist.

Bevorzugt ist eine Variante des Verfahrens, bei dem es sich bei dem Fördergut um geschnittene Glasfasern in Faserbündeln handelt. Die typische Länge der Glasfaser beträgt 3 bis 6 mm, der Durchmesser beträgt insbesondere von 5 µm bis 50 µm. Ein Faserbündel hat üblicherweise einen rechteckigen Querschnitt von z.B. 1 mm Höhe und 3 mm Breite.

Als Fördergas wird vorzugsweise Druckluft, insbesondere getrocknete Druckluft verwendet.

Durch das erfindungsgemäße Verfahren wird erreicht, dass feinteilige Schüttgüter, die unter mechanischer Beanspruchung geschädigt werden, ohne Qualitätseinbußen pneumatisch gefördert werden können. Das Verfahren ist robust und kostengünstig. Aufgrund der Vermeidung hoher Fördergeschwindigkeiten ist auch die Abrasion der Förderanlage klein.

Anhand nachstehender Figur wird die Erfindung beispielhaft näher erläutert.

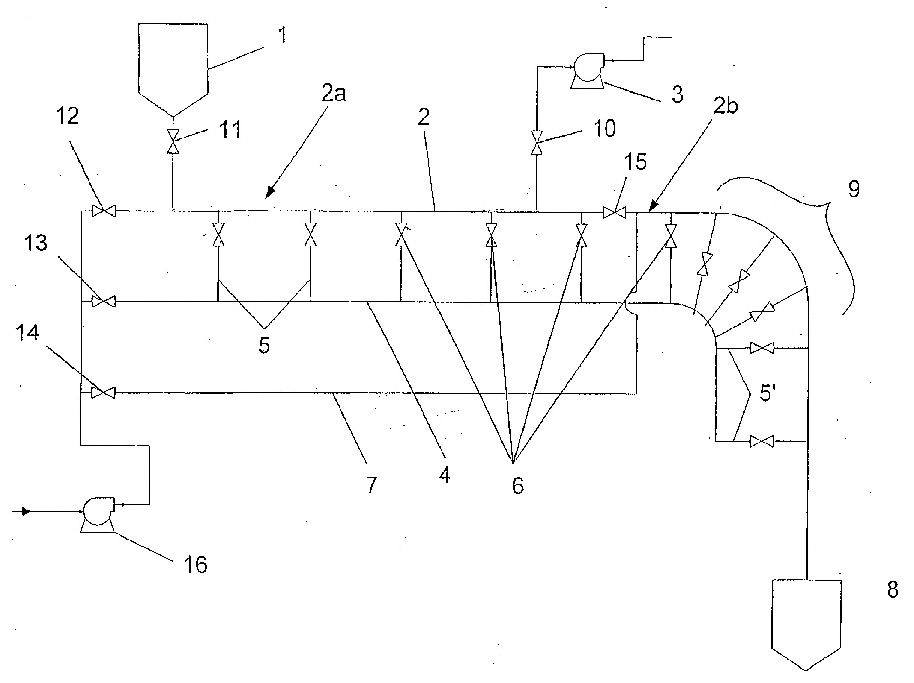

Fig. 1 zeigt die Vorrichtung in schematischer Form

### Beispiele

In Figur 1 ist eine Anlage zur pneumatischen Förderung von geschnittenen Glasfasern schematisch dargestellt. Die Glasfasern liegen als Flocke aus ca. 2000 Fasern vor mit einer Länge von 4,5 mm und etwa 0,5 mm Durchmesser. Der Einzelfaserdurchmesser ist ca. 5 µm.

Die zu fördernden, geschnittenen Glasfasern befinden sich im Aufgabebehälter 1. Alle Hähne sind geschlossen. In einem ersten Schritt werden die Hähne 10 und 11 geöffnet und mittels des Gebläses 3 eine Portion von ca 150 kg der geschnittenen Glasfasern innerhalb von 1 min aus dem Aufgabebehälter 1 in den ersten Abschnitt 2a des pneumatischen Förderrohrs 2 gesaugt. Die Hähne 10 und 11 werden geschlossen.

In einem zweiten Schritt werden die Hähne 12, 13 und 15 geöffnet und die im ersten Schritt in den ersten Abschnitt 2a des Förderrohrs 2 geförderte Portion an geschnittenen Glasfasern innerhalb von 20 sec durch das Fördergas in den zweiten Abschnitt 2b des Förderrohrs 2 mittels Druckförderung gefördert. Als Fördergas wird Druckluft verwendet. Der Druck der Druckluft wird durch das Gebläse 16 aufgebaut. Die Hähne 12 und 15 werden geschlossen, Hahn 13 bleibt geöffnet, um die Fördergas-Nebenleitung 4 mit Druckluft zu versorgen.

In einem dritten Schritt wird der Hahn 14 geöffnet. Die im zweiten Schritt in den zweiten Abschnitt 2b des Förderrohrs 2 geförderte Aufgabeportion an geschnittenen Glasfasern wird nun durch die Druckluft durch den zweiten Abschnitt 2b des Förderrohrs 2 bis zur Abgabestelle 8 gefördert. Die Förderung erfolgt innerhalb von 2 min. Die Druckluftmenge ist auf 200 m3/h unter Normalbedingungen eingestellt, was einer Gasleerrohrgeschwindigkeit von ca. 5 m/s entspricht. Anschließend wird Hahn 14 geschlossen.

Im Falle einsetzender oder auftretender Verstopfungen öffnen die Absperrarmaturen 6, die im Bereich des ersten Abschnitts 2a des Förderrohrs 2 über kurze Rohrstücke 5 und im Bereich des zweiten Abschnitts 2b des Förderrohrs 2 über kurze Rohrstücke 5' mit der Fördergas-Nebenleitung 4 verbunden sind. Dadurch wird die Förderung der Aufgabeportion der geschnittenen Glasfasern hinter der einsetzenden oder auftretenden Verstopfung aufrecht erhalten. Durch die eintretende Druckluft aus der Fördergas-Nebenleitung 4 werden die einsetzenden oder auftretenden Verstopfungen gelockert und schließlich aufgelöst.

Im Bereich 9 des zweiten Abschnitts 2a des Förderrohrs 2 ist beispielhaft eine Krümmung des Förderrohrs 2 gezeigt, in der die Gefahr einer Verstopfung erhöht ist. Daher ist im Bereich 9 die Anzahl der Absperrarmaturen 6 pro Rohrlänge erhöht.

Während der Ausführung des dritten Schritts eines Förderzyklusses wird zeitgleich bereits der erste Schritt des nächsten Förderzyklus ausgeführt.

## Patentansprüche

1. Verfahren zur pneumatischen Förderung von feinteiligen Schüttgütern unter Verwendung einer Vorrichtung, die wenigstens aufweist einen Aufgabebehälter (I), ein pneumatisches Förderrohr (2) mit einem ersten Abschnitt (2a) und einen zweiten Abschnitt (2b), eine Saugfördereinrichtung (3) für das Fördergas, eine Druckfördereinrichtung (16) für das Fördergas, eine Fördergas-Nebenleitung (4), mehrere Absperrarmaturen (6) zwischen dem pneumatischen Förderrohr (2) und der Fördergas-Nebenleitung (4) und eine Abgabestelle (8), wobei
a) man in einem ersten Schritt den ersten Abschnitt (2a) des Förderrohrs (2) mit einer Aufgabeportion des Förderguts und Fördergas aus einem Aufgabebehälter (1) mittels Saugförderung füllt,
b) man in einem zweiten Schritt das Fördergut aus dem ersten Abschnitt (2a) des Förderrohrs (2) mittels Druckförderung in den zweiten Abschnitt (2b) des Förderrohrs (2) überführt und
c) man in einem dritten Schritt die in den zweiten Abschnitt (2b) des Förderrohrs (2) geförderte Aufgabeportion des Förderguts mittels Druckförderung zur Abgabestelle (8) fördert,
wobei die Fördergas-Nebenleitung (4) endständig verschlossen oder verschließbar ist und die Druckförderung im zweiten Abschnitt (2b) des Förderrohrs (2) mit einer konstanten Fördergasmenge für Förderrohr (2) und Fördergas-Nebenleitung (4) betrieben wird, **dadurch gekennzeichnet, dass** das Förderrohr an der Innenwand eine Härte von 50 bis 90 HRC aufweist.

2. Verfahren nach Anspruch 1, **dadurch gekennzeichnet, dass** das pneumatische Förderrohr aus durchgehärtetem Stahl ausgeführt ist.

3. Verfahren nach Anspruch 1, **dadurch gekennzeichnet, dass** man in den zur Verstopfung neigenden Stellen (9) des Förderrohrs (2) mittels einer erhöhten Anzahl an Absperrarmaturen (6) das Auftreten von Verstopfungen verhindert, indem die an diesen Stellen (9) installierten Absperrarmaturen (6) bei auftretendem Druckverlust öffnen und in den Bereich der einsetzenden Verstopfung Fördergas einleiten.

4. Verfahren nach einem der Ansprüche 1 bis 3, **dadurch gekennzeichnet, dass** man Absperrarmaturen (6) verwendet, die zweistufig ausgebildet sind, wobei die erste Stufe die an das Förderrohr (2) angeschlossen ist, rückschlagsichernd ist und schließt, wenn der Druck in dem pneumatischen Förderrohr (2) gleich groß oder größer als der Druck in der Fördergas-Nebenleitung (4) ist.

5. Verfahren nach einem der Ansprüche 1 bis 4, **dadurch gekennzeichnet, dass** man Absperrarmaturen (6) verwendet, die zweistufig ausgebildet sind, wobei die zweite Stufe die an die Fördergas-Nebenleitung (4) angeschlossen ist, als Einlassventil mit Druckvoreinstellung für das Fördergas aus der Fördergas-Nebenleitung (4) ausgebildet ist, wobei ein Druck voreingestellt wird, der größer ist als der Druck an der Anschlussstelle im Förderrohr (2) bei verstopfungsfreiem Betrieb des Förderrohrs (2).

6. Verfahren nach Anspruch 5, **dadurch gekennzeichnet, dass** der Druck in der zweiten Stufe der Absperrarmaturen (6) in Förderrichtung gesehen von Armatur zu Armatur ansteigend voreingestellt wird.

7. Verfahren nach einem der Ansprüche 1 bis 6, **dadurch gekennzeichnet, dass** man ein Förderrohr (2) verwendet, das mit der Fördergas-Nebenleitung (4) über eine Vielzahl von Absperrarmaturen (6) in Abständen von 200 mm bis 2000 mm verbunden ist.

8. Verfahren gemäß einem der Ansprüche 1 bis 7, **dadurch gekennzeichnet, dass** es sich bei dem Fördergut um geschnittene Glasfasern handelt.

9. Vorrichtung zur pneumatischen Förderung von feinteiligen Schüttgütern, insbesondere Glasfasern, die wenigstens aufweist einen Aufgabebehälter (1), ein pneumatisches Förderrohr (2) mit einem ersten Abschnitt (2a) und einen zweiten Abschnitt (2b), eine Saugfördereinrichtung (3) für das Fördergas, die mit dem Ende des ersten Abschnitts (2a) des Förderrohrs (2) verbunden ist, eine Druckfördereinrichtung (16) für das Fördergas, eine Fördergas-Nebenleitung (4), mehrere Absperrarmaturen (6) zwischen pneumatischem Förderrohr (2) und Fördergas-Nebenleitung (4) und eine Abgabestelle (8), wobei das Förderrohr (2) in den zur Verstopfung neigenden Stellen (9) eine erhöhte Anzahl an Absperrarmaturen (6) aufweist, die das Auftreten von Verstopfungen verhindern, **dadurch gekennzeichnet, dass** das Förderrohr an der Innenwand eine Härte von 50 bis 90 HRC aufweist.

10. Vorrichtung gemäß Anspruch 9, **dadurch gekennzeichnet, dass** das pneumatische Förderrohr aus durchgehärtetem Stahl ausgeführt ist.

11. Vorrichtung nach Anspruch 9 oder 10, **dadurch gekennzeichnet, dass** die Absperrarmaturen (6) zweistufig ausgebildet sind, wobei die erste Stufe die an das Förderrohr (2) angeschlossen ist, rückschlagsichernd gegenüber erhöhtem Druck im Förderrohr (2) ausgebildet ist.

12. Vorrichtung nach einem der Ansprüche 9 bis 11, **dadurch gekennzeichnet, dass** die Absperrarmaturen (6) zweistufig ausgebildet sind, wobei die zweite Stufe die an die Fördergas-Nebenleitung (4) angeschlossen ist, als Einlassventil mit Druckvoreinstellung für das Fördergas aus der Fördergas-Nebenleitung (4) ausgebildet ist.

13. Vorrichtung nach einem der Ansprüche 9 bis 12, **dadurch gekennzeichnet, dass** das Förderrohr (2) mit der Fördergas-Nebenleitung (4) über eine Vielzahl von Absperrarmaturen (6) in Abständen von 200 mm bis 2000 mm verbunden ist.

14. Vorrichtung nach einem der Ansprüche 9 bis 13, **dadurch gekennzeichnet, dass** die Druckfördereinrichtung absperrbar mit der Fördergas-Nebenleitung verbunden ist.

15. Vorrichtung nach einem der Ansprüche 9 bis 14, **dadurch gekennzeichnet, dass** die Druckfördereinrichtung (16) absperrbar mit dem Anfang des zweiten Abschnitts (2b) des Förderrohrs (2) verbunden ist.

16. Vorrichtung nach einem der Ansprüche 9 bis 15, **dadurch gekennzeichnet, dass** zwischen dem ersten Abschnitt (2a) des Förderrohrs (2) und dem zweiten Abschnitt (2b) des Förderrohrs (2) eine Absperrarmatur (15), insbesondere ein Quetschventil, angeordnet ist.

17. Vorrichtung nach einem der Ansprüche 9 bis 16, **dadurch gekennzeichnet, dass** zwischen dem Aufgabebehälter (1) und dem ersten Abschnitt (2a) des Förderrohrs (2) eine Absperrarmatur (11), insbesondere ein Quetschventil angeordnet ist.

## Claims

1. Method of pneumatically conveying fine bulk material using an apparatus which at least has a charging container (1), a pneumatic conveying pipe (2) having a first portion (2a) and a second portion (2b), a suction conveying device (3) for the conveying gas, a pressure conveying device (16) for the conveying gas, a conveying gas supplementary line (4), a plurality of shut-off devices (6) between the pneumatic conveying pipe (2) and the conveying gas supplementary line (4), and a discharge point (8) and which involves
a) filling, in a first step, the first portion (2a) of the conveying pipe (2) with a charging portion of the conveyed material and conveying gas from a charging container (1) by means of suction conveying;
b) transferring, in a second step, the conveyed material from the first portion (2a) of the conveying pipe (2) by means of pressure conveying into the second portion (2b) of the conveying pipe (2); and
c) conveying, in a third step, the charging portion of the conveyed material conveyed in the second portion (2b) of the conveying pipe (2) to the discharge point (8), by means of pressure conveying;
where the conveying gas supplementary line (4) is closed or closable at the ends, and the pressure conveying in the second portion (2b) of the conveying pipe (2) is operated with a constant conveying gas quantity for the conveying pipe (2) and conveying gas supplementary line (4), **characterized in that** the conveying pipe at the inner wall has a hardness of 50 to 90 HRC.

2. Method according to Claim 1, **characterized in that** the pneumatic conveying pipe is made of fully hardened steel.

3. Method according to Claim 1, **characterized in that** in the clog-prone points (9) of the conveying pipe (2) the incidence of clogging is prevented by means of an increased number of shut-off devices (6), by virtue of the shut-off devices (6) installed at these points (9) opening when a drop in pressure occurs, and introducing conveying gas into the region of incipient clogging.

4. Method according to any one of Claims 1 to 3, **characterized in that** use is made of shut-off devices (6) which are of two-stage design, the first stage, which is connected to the conveying pipe (2), providing blowback protection and closing when the pressure in the pneumatic conveying pipe (2) is equal to or greater than the pressure in the conveying gas supplementary line (4).

5. Method according to any one of Claims 1 to 4, **characterized in that** use is made of shut-off devices (6) which are of two-stage design, the second stage, which is connected to the conveying gas supplementary line (4), being designed as an inlet valve having a pressure presetting for the conveying gas from the conveying gas supplementary line (4), where a pressure is preset which is greater than the pressure at the connection point in the conveying pipe (2) in clog-free operation of the conveying pipe (2).

6. Method according to Claim 5, **characterized in that** the pressure in the second stage of the shut-off devices (6) is preset ascendingly from shut-off device to shut-off device as viewed in the conveying direction.

7. Method according to any one of Claims 1 to 6, **characterized in that** use is made of a conveying pipe (2) which is connected to the conveying gas supplementary line (4) via a multiplicity of shut-off devices (6) at distances from 200 mm to 2000 mm.

8. Method according to any one of Claims 1 to 7, **characterized in that** the conveyed material comprises cut glass fibres.

9. Apparatus for pneumatically conveying fine bulk material, more particularly glass fibres, which at least has a charging container (1), a pneumatic conveying pipe (2) having a first portion (2a) and a second portion (2b), a suction conveying device (3) for the conveying gas, which is connected to the end of the first portion (2a) of the conveying pipe (2), a pressure conveying device (16) for the conveying gas, a conveying gas supplementary line (4), a plurality of shut-off devices (6) between the pneumatic conveying pipe (2) and the conveying gas supplementary line (4), and a discharge point (8), where, in the clog-prone points (9), the conveying pipe (2) has an increased number of shut-off devices (6) which prevent the incidence of clogs, **characterized in that** the conveying pipe at the inner wall has a hardness of 50 to 90 HRC.

10. Apparatus according to Claim 9, **characterized in that** the pneumatic conveying pipe is made of fully hardened steel.

11. Apparatus according to Claim 9 or 10,
**characterized in that** the shut-off devices (6) are of two-stage design, where the first stage, which is connected to the conveying pipe (2), is designed so as to provide blowback protection relative to increased pressure in the conveying pipe (2).

12. Apparatus according to any one of Claims 9 to 11, **characterized in that** the shut-off devices (6) are of two-stage design, where the second stage, which is connected to the conveying gas supplementary line (4), is designed as an inlet valve having a pressure presetting for the conveying gas from the conveying gas supplementary line (4).

13. Apparatus according to any one of Claims 9 to 12, **characterized in that** the conveying pipe (2) is connected to the conveying gas supplementary line (4) via a multiplicity of shut-off devices (6) at distances from 200 mm to 2000 mm.

14. Apparatus according to any one of Claims 9 to 13, **characterized in that** the pressure conveying device is connected, such that it may be shut off, to the conveying gas supplementary line.

15. Apparatus according to any one of Claims 9 to 14, **characterized in that** the pressure conveying device (16) is connected to the beginning of the second portion (2b) of the conveying pipe (2) such that it may be shut off.

16. Apparatus according to any one of Claims 9 to 15, **characterized in that** a shut-off device (15), in particular a pinchcock, is disposed between the first portion (2a) of the conveying pipe (2) and the second portion (2b) of the conveying pipe (2).

17. Apparatus according to any one of Claims 9 to 16, **characterized in that** a shut-off device (11), in particular a pinchcock, is disposed between the charging container (1) and the first portion (2a) of the conveying pipe (2).

## Revendications

1. Procédé de transport pneumatique de produits en vrac en fines particules par recours à un dispositif qui présente au moins un récipient de fourniture (1), un tube (2) de transport pneumatique qui présente un premier tronçon (2a) et un deuxième tronçon (2b), un dispositif (3) de transport par aspiration pour le gaz de transport, un dispositif (16) de transport sous pression pour le gaz de transport, un conduit secondaire (4) de gaz de transport, plusieurs dispositifs de fermeture (6) situés entre le tube (2) de transport pneumatique et le conduit secondaire (4) de gaz de transport ainsi qu'un emplacement de fourniture (8), et dans lequel :
a) dans une première étape, on remplit au moyen d'un transport par aspiration et depuis un récipient de fourniture (1) le premier tronçon (2a) du tube de transport (2) par une dose de fourniture du produit à transporter et du gaz de transport,
b) dans une deuxième étape, on transfère par transport sous pression le produit à transporter depuis le premier tronçon (2a) du tube de transport (2) jusque dans le deuxième tronçon (2b) du tube de transport (2) et
c) dans une troisième étape, on transporte au moyen d'un transport sous pression la dose de fourniture du produit à transporter dans le deuxième tronçon (2b) du tube de transport (2) jusqu'à l'emplacement de fourniture (8),
le conduit secondaire (4) de gaz de transport ayant son extrémité fermée ou apte à être fermée et le transport sous pression dans le deuxième tronçon (2b) du tube de transport (2) s'effectuant à un débit constant de gaz de transport dans le tube de transport (2) et le conduit secondaire (4) de gaz de transport,
**caractérisé en ce que**
la paroi intérieure du tube de transport a une dureté HRC de 50 à 90.

2. Procédé selon la revendication 1, **caractérisé en ce que** le tube de transport pneumatique est réalisé en acier durci à coeur.

3. Procédé selon la revendication 1, **caractérisé en ce qu'**aux emplacements (9) du tube de transport (2) qui présentent une tendance au colmatage, on empêche l'apparition de colmatages au moyen d'un plus grand nombre de dispositifs de fermeture (6) et en ouvrant les dispositifs de fermeture (6) installés en ces emplacements (9) lorsqu'une perte de charge survient et en introduisant du gaz de transport dans la zone où un colmatage s'est établi.

4. Procédé selon l'une des revendications 1 à 3, **caractérisé en ce que** l'on utilise des dispositifs de fermeture (6) configurés en deux étages, le premier étage étant raccordé au tube de transport (2), étant anti-retour et se fermant lorsque la pression dans le tube (2) de transport pneumatique est égale ou supérieure à la pression dans le conduit secondaire (4) de gaz de transport.

5. Procédé selon l'une des revendications 1 à 4, **caractérisé en ce que** l'on utilise des dispositifs de fermeture (6) configurés en deux étages, le deuxième étage étant raccordé au conduit secondaire (4) de gaz de transport et étant configuré comme soupape d'admission à préréglage de la pression du gaz de transport provenant du conduit secondaire (4) de gaz de transport, la pression préréglée étant supérieure à la pression qui règne à l'emplacement de raccordement au tube de transport (2) lorsque le tube de transport (2) fonctionne sans colmatage.

6. Procédé selon la revendication 5, **caractérisé en ce que** la pression dans le deuxième étage des dispositifs de fermeture (6) est réglée de manière à croître d'un dispositif à l'autre dans la direction du transport.

7. Procédé selon l'une des revendications 1 à 6,
**caractérisé en ce que** l'on utilise un tube de transport (2) qui est relié au conduit secondaire (4) de gaz de transport par plusieurs dispositifs de fermeture (6) disposés à des écarts de 200 mm à 2 000 mm.

8. Procédé selon l'une des revendications 1 à 7, **caractérisé en ce que** le produit à transporter est constitué de fibres de verre découpées.

9. Dispositif de transport pneumatique de produits en vrac en fines particules, en particulier de fibres de verre, qui présente au moins un récipient de fourniture (1), un tube (2) de transport pneumatique qui présente un premier tronçon (2a) et un deuxième tronçon (2b), un dispositif (3) de transport par aspiration prévu pour le gaz de transport et relié à l'extrémité du premier tronçon (2a) du tube de transport (2), un dispositif (16) de transport sous pression pour le gaz de transport, un conduit secondaire (4) de gaz de transport, plusieurs dispositifs de fermeture (6) situés entre le tube (2) de transport pneumatique et le conduit secondaire (4) de gaz de transport, ainsi qu'un emplacement de fourniture (8), le tube de transport (2) présentant aux emplacements (9) qui présentent une tendance au colmatage un nombre plus grand de dispositifs de fermeture (6) qui empêchent l'apparition de colmatages,
**caractérisé en ce que**
la paroi intérieure du tube de transport présente une dureté HRC de 50 à 90.

10. Dispositif selon la revendication 9, **caractérisé en ce que** le tube de transport pneumatique est réalisé en acier durci à coeur.

11. Dispositif selon les revendications 9 ou 10,
**caractérisé en ce que** les dispositifs de fermeture (6) sont configurés en deux étages, le premier étage étant raccordé au tube de transport (2) et étant anti-retour lorsque la pression dans le tube (2) de transport pneumatique augmente.

12. Dispositif selon l'une des revendications 9 à 11, **caractérisé en ce que** les dispositifs de fermeture (6) sont réalisés en deux étages, le deuxième étage raccordé au conduit secondaire (4) de gaz de transport étant configuré comme soupape d'admission à préréglage de la pression du gaz de transport provenant du conduit secondaire (4) de gaz de transport.

13. Dispositif selon l'une des revendications 9 à 12, **caractérisé en ce que** le tube de transport (2) est relié au conduit secondaire (4) de gaz de transport par plusieurs dispositifs de fermeture (6) disposés à des écarts de 200 mm à 2 000 mm.

14. Dispositif selon l'une des revendications 9 à 13, **caractérisé en ce que** le dispositif de transport sous pression est relié au conduit secondaire de gaz de transport de manière à pouvoir être bloqué.

15. Dispositif selon l'une des revendications 9 à 14, **caractérisé en ce que** le dispositif (16) de transport sous pression est relié de manière blocable au début du deuxième tronçon (2b) du tube de transport (2).

16. Dispositif selon l'une des revendications 9 à 15, **caractérisé en ce qu'**un dispositif de fermeture (15) en particulier une soupape écrasable est disposée entre le premier tronçon (2a) du tube de transport (2) et le deuxième tronçon (2b) du tube de transport (2).

17. Dispositif selon l'une des revendications 9 à 16, **caractérisé en ce qu'**un dispositif de fermeture (11), en particulier une soupape écrasable, est disposé entre le récipient de fourniture (1) et le premier tronçon (2a) du tube de transport (2).
